# FASCICULE DE BREVET EUROPEEN

(11) **EP 0 349 363 B1**
(45) Date de publication et mention de la délivrance du brevet: **29.05.1996**
(21) Numéro de dépôt: 89401625.2
(22) Date de dépôt: 12.06.1989
(51) Int. Cl.: C09K 3/32, C02F 1/68

(54) **Article et procédé pour absorber des produits polluants**
Artikel und Verfahren zum Saugen von verunreinigenden Produkten
Article and process for absorbing polluting products

(30) Priorité: 30.06.1988 FR 8808855
(43) Date de publication de la demande: 03.01.1990
(73) Titulaire: ELF ATOCHEM S.A., F-92800 Puteaux (FR)
(72) Inventeur: Stein, Claude, F-60270 Gouvieux (FR); Duquenne, Daniel, F-60600 Clermont (FR)
(74) Mandataire: Rochet, Michel

(56) Documents cités:
- EP-A- 0 027 359
- FR-A- 2 090 452
- FR-A- 2 288 709
- FR-A- 2 611 146
- US-A- 4 366 067

## Description

La présente invention se rapporte au domaine de la dépollution de surfaces liquides ou solides.

On connaît déjà, notamment par les brevets US-A-4.366.067, FR-A-2.090.452 et EP-A-0.027.359, des articles destinés à éliminer du pétrole et/ou des huiles présents à la surface d'un liquide, comprenant un emballage ou sac en tissu ou autre matériau rempli de plumes d'oiseaux, de perlite expansée ou encore de mousse de polyisocyanurate à cellules fermées. L'absorption de pétrole et/ou d'huiles par ces produits s'avère toutefois nettement insuffisante.

Le brevet FR-A-2.288.709 décrit par ailleurs un procédé d'enlèvement et de récupération de produits pétroliers, notamment d'hydrocarbures lourds, répandus sur une surface liquide ou solide par mise en contact, avec ledit produit pétrolier, d'un polymère finement divisé capable de produire avec le produit pétrolier une pellicule possédant une résistance suffisante pour pouvoir être tractée,puis enlèvement de ladite pellicule par des moyens mécaniques. Un polymère préféré pour la mise en oeuvre de ce procédé est un polymère du bicyclo(2.2.1)heptène-2 ou de son dérivé méthylé, ces polymères formant avec les hydrocarbures pétroliers une pellicule cohérente pouvant contenir jusqu'à 10 parties en poids de produits pétroliers pour une partie de polymère. La mise en contact du polymère avec le produit pétrolier s'effectue, selon ce procédé connu, par simple saupoudrage du polymère à la surface dudit produit. Il a toutefois été constaté que l'emploi de ces polymères par saupoudrage sur les nappes de produits pétroliers présente l'inconvénient, dans les conditions météorologiques difficiles qui prévalent souvent durant les opérations de dépollution d'urgence et notamment par temps de vent, de conduire à l'entraînement d'une partie importante de la poudre de polymère en dehors de l'aire polluée visée et, par conséquent, de diminuer l'efficacité de l'opération.

Par ailleurs dans certains cas, notamment celui des huiles de transformateurs et celui d'hydrocarbures légers tels que fuel domestique, solvants, benzène, toluène et xylènes, le pouvoir absorbant du polymère de bicyclo (2.2.1.)heptène-2 peut atteindre 15 et même 40 parties en poids d'hydrocarbure pour 1 partie de polymère, tout en conduisant à des absorbats secs, dépourvus de toute exsudation ultérieure de l'hydrocarbure même sous une pression de 3 à 70 bars. De tels absorbats n'ont cependant plus une cohésion suffisante pour pouvoir être enlevés sous forme de pellicule tractable. Il s'agit plutôt de masses semi-agglomérées se présentant sous une forme de gélatine difficile à ramasser et/ou à évacuer.

Enfin la mise en oeuvre du procédé selon le brevet FR-A-2.288.709 se heurte d'une part à l'insuffisance de la cinétique d'absorption des hydrocarbures et/ou des huiles de transformateurs par le polymère de bicyclo(2.2.1.)heptène-2, d'autre part au vieillissement de ce polymère à l'issue d'un stockage prolongé.

La demanderesse a trouvé que les problèmes évoqués ci-dessus, liés à l'épandage de polymère en poudre par temps de vent, à la structure de certains absorbats, à la cinétique d'absorption et/ou au vieillissement du polymère peuvent être judicieusement surmontés, grâce à la présente invention, en plastifiant le polymère et en enfermant la poudre de polymère plastifié dans une housse en textile à maille fine dont les extrémités sont fermées après introduction du polymère.

Un premier objet de la présente invention consiste donc en un article de dépollution comprenant un polymère en poudre de bicyclo(2.2.1) heptène-2 ou de son dérivé méthylé, caractérisé en ce qu'il comprend au moins une housse en textile à maille fine remplie au moins partiellement dudit polymère, celui-ci étant préalablement aggloméré par un agent lui impartissant une certaine plastification.

La housse faisant partie de l'article de dépollution selon l'invention peut être réalisée en un matériau textile quelconque, tissé ou non-tissé, choisi notamment parmi les matériaux synthétiques tels que nylon, polyester, polypropylène, viscose ou leurs mélanges ou encore parmi les matériaux naturels tels que le coton. Elle peut également être réalisée en un matériau textile extensible. Ladite housse peut être de forme quelconque telle que par exemple une forme de coussin, de boudin ou toute autre. Elle peut avoir des dimensions diverses adaptées, à l'application visée et choisies notamment entre 3 centimètres et 10 mètres environ, sans que ces valeurs chiffrées présentent un caractère limitatif. Afin d'éviter que le polymère contenu dans la housse puisse s'échapper, il est évidemment important que les côtés et/ou les extrémités de la housse soient obturés par un moyen de fermeture quelconque, par exemple qu'ils soient cousus, noués ou cerclés après remplissage dudit polymère.

La housse utilisable selon la présente invention pourra également comporter, fixé de préférence à au moins l'une de ses extrémités, au moins un moyen de préhension tel qu'une attache ou un noeud permettant de la tirer ou de la tracter par des moyens mécaniques habituels.

Par ailleurs il est également important que la housse en textile faisant partie de l'article de dépollution selon l'invention possède une maille fine permettant au produit polluant liquide (pétrole, huile, hydrocarbure léger ou autre) d'entrer dans la housse et de venir au contact du polymère aggloméré. On entend par là que la maille de la housse textile doit avoir une dimension inférieure à la dimension de la quasi-totalité (de préférence au moins 95 %) des particules du polymère aggloméré.

Selon la présente invention, la housse en textile à maille fine doit être remplie au moins partiellement de polymère aggloméré de bicyclo(2.2.1)heptène-2 ou de son dérivé méthylé. Par remplissage partiel on entend que la housse ne doit pas nécessairement être remplie de la quantité maximale de polymère que sa forme géométrique pourrait théoriquement autoriser, ceci afin de ménager un volume résiduel disponible pour les produits polluants devant être absorbés par le polymère aggloméré et afin d'éviter les risques de rupture du système de fermeture de la housse, tel que couture ou autre. De préférence le polymère aggloméré remplira de 20% à 80% environ du volume théorique de la housse. Le polymère contenu dans la housse se présente sous forme d'une poudre grossière de densité apparente comprise entre 0,15 et 0,50 environ et de dimension de particules comprise entre 0,5 et 20 mm environ. Les polymères en poudre du bicyclo(2.2.1)heptène-2 ou de son dérivé méthylé sont bien connus et peuvent être additionnés, au cours de ou après leut fabrication, de charges jouant un rôle dit d'agents anti-mottants, tel que silice, talc, stérates de calcium, de sodium ou de zinc et/ou d'agents compatibilisants. Selon la présente invention, ledit polymère doit nécessairement être aggloméré au moyen d'un agent lui impartissant une certaine plastification tel que des hydrocarbures liquides et huiles pétrolière, paraffiniques, aromatiques ou naphténiques, des phtalates, adipates, sebaçates, des alkylbenzènes, etc. La proportion de l'agent de plastification par rapport au polymère peut être comprise entre 0,5 et 50 % en poids, et de préférence entre 5 et 35% en poids.

Par remplissage partiel de la housse on entend, selon une variante de réalisation de la présente invention, que la matière capable d'absorber des polluants liquides et remplissant la housse peut être constituée d'un mélange de polymère aggloméré de bicyclo(2.2.1)heptène-2 et d'au moins un autre agent absorbant de produits polluants, la proportion de cet autre agent absorbant dans le mélange étant au plus égale à 97% en poids environ, de préférence au plus égale à 40% en poids environ. Parmi les autres agents absorbants de produits polluants utilisables dans le cadre de cette variante de la présente invention, on peut citer notamment des agents organiques tels que des polymères à base d'oléfine (proplyène, éthylène, etc) ou de styrène, fibreux ou en poudre, régènérés ou non, compacts ou expansés, des agents végétaux tels que des déchets de cosse d'arachide ou de céréales et des agents minéraux tels que argile, craie, silice, silicates, alumine ou cendres volantes.

Un second objet de la présente invention consiste en un procédé pour absorber un produit polluant liquide, caractérisé en ce qu'on dispose à la surface dudit liquide au moins une housse en textile à maille fine remplie au moins partiellement d'un polymère en poudre de bicyclo(2.2.1)heptène-2 ou de son dérivé méthylé, ledit polymère étant préalablement aggloméré par un agent lui impartissant une certaine plastification.

Le procédé selon l'invention consiste donc à utiliser l'article de dépollution décrit précédemment pour absorber un polluant liquide. Il est notamment applicable sur une surface liquide telle que celle d'une mer, d'un lac ou d'un cours d'eau lorsque des produits polluants y ont été malencontreusement déversés. Il est également applicable sur une surface solide, telle qu'un sol sur lequel une machine (par exemple tour ou fraiseuse) laisse fuir de l'huile. Ce procédé est plus particulièrement applicable au cas où le produit polluant est un produit pétrolier, notamment un hydrocarbure ou un lubrifiant ou fluide hydraulique. Pour la mise en oeuvre du procédé selon l'invention, le nombre de housses à utiliser devra être adapté en fonction de la nature exacte des hydrocarbures pétroliers répandus sur la surface polluée. En effet la capacité d'absorption du polymère aggloméré de bicyclo(2.2.1)heptène-2 varie fortement d'une fraction d'hydrocarbures à une autre: alors qu'elle atteint généralement de l'ordre de 1 à 10 parties en poids d'hydrocarbure pour 1 partie de polymère dans le cas des hydrocarbures lourds, comme mentionné par le brevet FR-A-2.288.709 cité précédemment, on a découvert de manière surprenante qu'elle peut atteindre jusqu'à 40 parties en poids d'hydrocarbures pour 1 partie en poids de polymère aggloméré dans le cas d'huiles de transformateurs et d'hydrocarbures plus légers tels que fuel domestique, benzène, toluène et xylène. Selon un mode de réalisation du procédé selon l'invention, le nombre de housses textiles disposées sur la surface polluée, lorsque le produit polluant est un produit pétrolier, est donc choisi de telle manière que la quantité de polymère aggloméré contenu dans l'ensemble des housses soit compris entre 1/40 et 1 fois la quantité de produit polluant à absorber.

Le temps nécessaire à l'absorption des produits polluants par le polymère aggloméré contenu dans la housse textile dépend d'une part de la nature chimique desdits produits polluants, d'autre part de leur mode de répartition, compacte ou dispersée, sur la surface polluée. En ce qui concerne ces produits pétroliers, ce temps dépend du fait de savoir s'il s'agit d'hydrocarbures lourds ou légers. Dans ce dernier cas, ce temps est généralement compris entre 5 secondes et 1 heure environ, à température ambiante. Dans tous les cas, le temps nécessaire à l'absoption des produits polluants par le polymère aggloméré est avantageusement inférieur au temps requis par l'emploi d'un polymère en poudre non aggloméré. Une fois l'essentiel des produits polluants absorbé par le polymère, la housse et son contenu peuvent être aisément évacués, notamment grâce au moyen de préhension indiqué précédemment, sans risques d'exsudation et/ou d'écoulement, par exemple vers un point de décharge autorisée ou encore vers un lieu d'incinération.

Les exemples ci-après sont donnés à titre illustratif et non limitatif de la présente invention.

### EXEMPLE 1 (comparatif)

On tamise un polybicyclo(2.2.1) heptène-2 commercialisé par la demanderesse sous la marque NORSOREX sur un tamis de taille 0,1 mm. Le refus de tamis, de granulométrie comprise entre 0,1 et 0,8 mm, est additionné de 1% d'acide stéarique. On introduit 500 g de ce mélange, de densité en vrac de 0,40, dans une housse en textile polyester de 1 mètre de long et 55 mm de diamètre, et dont les deux extrémités sont obturées au moyen de bagues métalliques.

A l'issue d'un temps t₁ (exprimé en jours) après sa confection, on dispose cette housse dans un bac de rétention de 120 cm de long et 30 cm de large, contenant 1,5 kg de fuel-oil domestique. Le fuel-oil est progressivement absorbé par le contenu de la housse. A l'issue d'un temps t₂ (exprimé en minutes) après la mise en contact, tout le fuel-oil a migré et se trouve emprisonné par la housse. Le fond du bac de rétention est quasi-totalement sec. La housse et son contenu peuvent être évacués sans risque d'exsudation ou d'écoulement. La même observation peut être faite lorsque la même quantité de fuel-oil domestique est répandue à la surface d'un bac contenant de l'eau. Le temps t₂ observé en fonction du temps t₁ est indiqué dans le tableau I ci-après.

**TABLEAU I**

| | | | |
|---|---|---|---|
| t₁ | 8 | 180 | 360 |
| t₂ | 30 | 65 | 180 |

### EXEMPLE 2

On réalise, dans un mélangeur à poudre dit mélangeur planétaire, à température ambiante, un mélange de 100 parties en poids de polybicyclo(2.2.1) heptène-2 commercialisé sous la marque NORSOREX, contenant 1 % d'acide stéarique, avec 15 parties en poids d'huile pétrolière naphténique commercialisée par la société NYNAS sous la marque NYTEX 00.

Le polymère a absorbé l'huile au bout de 10 minutes de mélangeage et se présente alors sous forme de particules de 0,5 à 2 mm et possède une densité en vrac de 0,30.

On introduit 575 g de ce mélange dans une housse identique à celle de l'exemple 1. Après obturation ds extrémités de la housse, celle-ci est soumise au test d'absorption de l'exemple 1. Le temps t₂ observé en fonction du temps t₁ est indiqué au tableau II ci-après.

**TABLEAU II**

| | | | |
|---|---|---|---|
| t₁ | 8 | 180 | 360 |
| t₂ | 19 | 21 | 23 |

### EXEMPLE 3

On reproduit la procédure de l'exemple 2 à l'exception suivante près : la quantité d'huile pétrolière naphténique utilisée est de 30 parties en poids au lieu de 15 parties.

Dans ces conditions le mélange se présente sous forme de particules de 0,5 à 10 mm et possède une densité en vrac de 0,25. Le temps t₂ observé en fonction du temps t₁ est indiqué au tableau III ci-après.

**TABLEAU III**

| | | | |
|---|---|---|---|
| t₁ | 8 | 180 | 360 |
| t₂ | 15 | 17 | 20 |

## Revendications

1. Article de dépollution comprenant un polymère en poudre de bicyclo(2.2.1.) heptène-2 ou de son dérivé méthylé, caractérisé en ce qu'il comprend au moins une housse en textile à maille fine remplie au moins partiellement dudit polymère, celui-ci étant préalablement aggloméré par un agent lui impartissant une certaine plastification.

2. Article selon la revendication 1, caractérisé en ce que ledit agent est choisi parmi les hydrocarbures liquides et huiles pétrolières, paraffiniques, aromatiques ou naphténiques, Les phtalates, adipates et sebaçates et les alkylbenzènes.

3. Article selon l'une des revendications 1 ou 2, caractérisé en ce que la proportion dudit agent par rapport au polymère est comprise entre 0,5 et 50 % en poids.

4. Article selon l'une des revendications 1 à 3, caractérisé en ce que la housse comporte, fixé de préférence à au moins l'une de ses extrémités, au moins un moyen de préhension permettant de la tirer ou de la tracter par des moyens mécaniques.

5. Article selon l'une des revendications 1 à 4, caractérisé en ce que le polymère contenu dans la housse présente une dimension de particules comprise entre 0,5 et 20 mm.

6. Article selon l'une des revendications 1 à 5, caractérisé en ce que le polymère en poudre est mélangé avec au moins un autre agent absorbant.

7. Procédé pour absorber un produit polluant liquide, caractérisé en ce qu'on dispose à la surface dudit liquide au moins une housse en textile à maille fine remplie au moins partiellement d'un polymère en poudre de bicyclo(2.2.1)heptène-2 ou de son dérivé méthylé, ledit polymère étant préalablement aggloméré par un agent lui impartissant une certaine plastification.

8. Procédé selon la revendication 7, caractérisé en ce que le produit polluant liquide est un produit pétrolier.

9. Procédé selon la revendication 8, caractérisé en ce que le nombre de housses est choisi de telle manière que la quantité de polymère en poudre contenu dans l'ensemble des housses soit compris entre 1/40 et 1 fois la quantité de produit polluant à absorber.

## Patentansprüche

1. Artikel zur Beseitigung von Verschmutzungen, enthaltend ein pulverförmiges Polymeres des Bicyclo[2.2.1]-2-heptens oder seines Methylderivats, dadurch gekennzeichnet, daß er mindestens eine feinmaschige Textilhülle umfaßt, die wenigstens teilweise mit dem Polymer gefüllt ist, wobei das Polymere vorher mittels eines Reagenzes, das dem Polymeren eine bestimmte Plastifizierung verleiht, agglomeriert wird.

2. Artikel nach Anspruch 1, dadurch gekennzeichnet, daß das Reagenz ausgewählt ist aus flüssigen Kohlenwasserstoffen, petrolischen, paraffinischen, aromatischen und naphthenischen Ölen, Phthalaten, Adipaten, Sebacaten und Alkylbenzolen.

3. Artikel nach einem der Ansprüche 1 oder 2, dadurch gekennzeichnet, daß die Menge des Reagenzes, bezogen auf das Polymere, zwischen 0,5 und 50 Gew.-% liegt.

4. Artikel nach einem der Ansprüche 1 bis 3, dadurch gekennzeichnet, daß die Hülle über mindestens eine Greifvorrichtung verfügt, die vorzugsweise an mindestens einem Ende der Hülle angebracht ist und das Ziehen und Schleppen der Hülle mit mechanischen Mitteln ermöglicht.

5. Artikel nach einem der Ansprüche 1 bis 4, dadurch gekennzeichnet, daß das in der Hülle enthaltende Polymere eine Teilchengröße zwischen 0,5 und 20 mm aufweist.

6. Artikel nach einem der Ansprüche 1 bis 5, dadurch gekennzeichnet, daß das pulverförmige Polymere mit mindestens einem weiteren absorbierenden Reagenz vermischt ist.

7. Verfahren zur Absorption eines flüssigen verschmutzenden Produktes, dadurch gekennzeichnet, daß man auf die Oberfläche der Flüssigkeit mindestens einen feinmaschigen Textilsack aufbringt, der wenigstens teilweise mit einem pulverförmigen Polymeren des Bicyclo[2.2.1]-2-heptens oder seines Methylderivats gefüllt ist, wobei das Polymere vorher mittels eines Reagenzes, das dem Polymeren eine bestimmte Plastifizierung verleiht, agglomeriert wird.

8. Verfahren nach Anspruch 7, dadurch gekennzeichnet, daß das verschmutzende flüssige Produkt ein Erdölprodukt ist.

9. Verfahren nach Anspruch 8, dadurch gekennzeichnet, daß die Zahl der Hüllen so ausgewählt ist, daß die Menge des pulverförmigen Polymeren, das in den gesamten Hüllen enthalten ist, die 1/40fache bis 1fache Menge der zu absorbierenden, verschmutzenden Produkte darstellt.

## Claims

1. Decontamination article comprising a powdered polymer of bicyclo(2.2.1)hept-2-ene or the methyl derivative thereof, characterized in that it comprises at least one fine-mesh textile cover which is at least part-filled with the said polymer, this polymer being preagglomerated with an agent which imparts a certain level of plasticization to the polymer.

2. Article according to Claim 1, characterized in that the said agent is chosen from liquid hydrocarbons and naphthenic, aromatic, paraffinic or petroleum oils, phthalates, adipates and sebacates, and alkylbenzenes.

3. Article according to either of Claims 1 and 2, characterized in that the proportion of the said agent relative to the polymer is between 0.5 and 50% by weight.

4. Article according to one of Claims 1 to 3, characterized in that the cover includes, preferably attached to at least one of its ends, at least one means of gripping which allows it to be pulled or towed by mechanical means.

5. Article according to one of Claims 1 to 4, characterized in that the polymer contained in the cover has a particle size of between 0.5 and 20 mm.

6. Article according to one of Claims 1 to 5, characterized in that the powdered polymer is mixed with at least one other absorbent agent.

7. Process for absorbing a liquid pollutant product, characterized in that at least one fine-mesh textile cover which is at least part-filled with a powdered polymer of bicyclo(2.2.1)hept-2-ene, or the methyl derivative thereof, is placed on the surface of the said liquid, the said polymer being preagglomerated with an agent which imparts a certain level of plasticization to the polymer.

8. Process according to Claim 7, characterized in that the liquid pollutant product is a petroleum product.

9. Process according to Claim 8, characterized in that the number of covers is chosen such that the amount of powdered polymer contained in all of the covers is between 1/40 and 1 times the amount of pollutant product to be absorbed.
